# EUROPÄISCHE PATENTSCHRIFT

(11) **EP 3 356 182 B1**
(45) Veröffentlichungstag und Bekanntmachung des Hinweises auf die Patenterteilung: **18.12.2019**
(21) Anmeldenummer: 16775220.3
(22) Anmeldetag: 29.09.2016
(51) Int. Cl.: B60Q 1/08, B60Q 1/14, B60R 16/03

(54) **VERFAHREN ZUM BETREIBEN EINER ANORDNUNG MIT WENIGSTENS EINER BELEUCHTUNGSEINRICHTUNG, ZUGEHÖRIGE ANORDNUNG UND KRAFTFAHRZEUG**
METHOD FOR OPERATING AN ASSEMBLY WITH AT LEAST ONE ILLUMINATION DEVICE, ASSOCIATED ASSEMBLY AND MOTOR VEHICLE
PROCÉDÉ POUR FAIRE FONCTIONNER UN ENSEMBLE COMPRENANT AU MOINS UN DISPOSITIF D'ÉCLAIRAGE, ENSEMBLE ASSOCIÉ ET VÉHICULE À MOTEUR

(30) Priorität: 02.10.2015 DE 102015012808
(43) Veröffentlichungstag der Anmeldung: 08.08.2018
(73) Patentinhaber: Audi AG, 85045 Ingolstadt (DE)
(72) Erfinder: FUNK, Christian, 69207 Sandhausen (DE); BARMEYER, Florenz, 02763 Zittau (DE); ARMBRUSTER, Tilman, 85055 Ingolstadt (DE); OMERBEGOVIC, Said, 65933 Frankfurt (DE); REIM, Johannes, 85072 Eichstätt (DE)
(86) Internationale Anmeldenummer: PCT/EP2016/073214
(87) Internationale Veröffentlichungsnummer: WO 2017/055415

(56) Entgegenhaltungen:
- EP-A1- 0 430 792
- EP-A1- 2 022 695
- WO-A2-2006/033821
- US-A1- 2006 038 959
- US-A1- 2006 146 552

## Beschreibung

Die Erfindung betrifft ein Verfahren zum Betreiben einer Anordnung mit wenigstens einer Beleuchtungseinrichtung für ein Kraftfahrzeug, wobei eine Erfassungseinrichtung wenigstens eine Objektinformation eines Objekts in einer Umgebung des Kraftfahrzeugs erfasst und eine Steuerungseinrichtung wenigstens ein Steuersignal aus der wenigstens einen Objektinformation erzeugt und die wenigstens eine Beleuchtungseinrichtung des Kraftfahrzeugs in Abhängigkeit des wenigstens einen Steuersignals gesteuert wird.

Aus dem Stand der Technik sind Kraftfahrzeuge bekannt, die mit Beleuchtungseinrichtungen, insbesondere Frontscheinwerfern, ausgestattet sind, die in Abhängigkeit einer Objektinformation eines sich im Umfeld des Kraftfahrzeugs befindenden Objekts steuerbar sind. Durch eine derartige Steuerung der Beleuchtungseinrichtung kann die Lichtverteilung, die von der Beleuchtungseinrichtung erzeugt wird, gezielt beeinflusst werden.

Die Lichtverteilung der Beleuchtungseinrichtung eines solchen Kraftfahrzeugs kann demnach von der Beleuchtungseinrichtung in Abhängigkeit eines Steuersignals erzeugt werden. Beispielsweise ist es somit möglich, gezielt Bereiche der Lichtverteilung der Beleuchtungseinrichtung auszublenden bzw. Bereiche gezielt mit Licht zu markieren. Vorteilhafterweise können somit entgegenkommende Kraftfahrzeuge aus der erzeugten Lichtverteilung ausgeblendet werden, was eine Blendung des Gegenverkehrs vermindert bzw. vermeidet. Ebenso können Objekte, wie beispielsweise Hindernisse oder Fußgänger gezielt mit Licht markiert werden, um so die Aufmerksamkeit des Fahrers auf diese Objekte zu lenken.

Derartige Beleuchtungseinrichtungen weisen beispielsweise einzelne Lichtquellen auf, die in Form einer Matrixform angeordnet sind. Diese Lichtquellen sind zumeist lichtemittierende Dioden (LED), die hinsichtlich ihrer Helligkeit einzeln gesteuert werden können. Durch die separate Steuerung der einzelnen Lichtquellen kann somit die Lichtverteilung der Beleuchtungseinrichtung gezielt angepasst werden. Ebenso ist es möglich mit einer einzelnen Lichtquelle mit einer nachgeschalteten Optikeinheit, beispielsweise ein Flüssigkristalldisplay oder eine Mikrospiegelanordnung, eine gezielt anpassbare Lichtverteilung zu erzeugen. Mit steigender Anzahl der LEDs bzw. feinerer Segmentierung der einzelnen Lichtquelle steigt jedoch der Aufwand hinsichtlich der von der Steuerungseinrichtung an die Beleuchtungseinrichtung zu übertragenden Daten. Insbesondere im Bereich hochauflösender Beleuchtungseinrichtungen, die mehrere einhunderttausend Pixel besitzen, ist eine Übertragung der benötigten Steuersignale über den im Kraftfahrzeug vorhandenen Bus nicht mehr möglich bzw. sehr aufwändig. Aus US 2006/0038959 A1 sind ein Verfahren gemäß dem Oberbegriff des Anspruchs 1 und eine Anordnung gemäß dem Oberbegriff des Anspruchs 10 bekannt.

Der Erfindung liegt daher die Aufgabe zugrunde, ein Verfahren zum Betreiben einer Anordnung mit wenigstens einer Beleuchtungseinrichtung für ein Kraftfahrzeug anzugeben, das die Übertragung von Steuersignalen an eine hochauflösende Beleuchtungseinrichtung verbessert.

Zur Lösung dieser Aufgabe ist bei einem Verfahren der eingangs genannten Art erfindungsgemäß vorgesehen, dass das Steuersignal kodiert und komprimiert an die Beleuchtungseinrichtung übertragen und dort dekodiert und dekomprimiert wird und die wenigstens eine Beleuchtungseinrichtung in Abhängigkeit des Steuersignals gesteuert wird.

Bei dem erfindungsgemäßen Verfahren ist es sonach vorgesehen, dass aus einer von einer Erfassungseinrichtung erfassten Objektinformation eines Objekts in einer Umgebung des Kraftfahrzeugs ein Steuersignal erzeugt wird. Ein solches Steuersignal muss für jede Beleuchtungseinrichtung des Kraftfahrzeugs separat erzeugt werden, da diese an unterschiedlichen Positionen des Kraftfahrzeugs angeordnet sind. Typischerweise weist ein Kraftfahrzeug zwei Frontscheinwerfer auf, die symmetrisch zur Längsachse des Kraftfahrzeugs links und rechts an der Vorderseite des Kraftfahrzeugs angeordnet sind. Aus der Objektinformation der Erfassungseinrichtung, die beispielsweise ein Radarsensor und/oder ein Lidarsensor und/oder ein Ultraschallsensor und/oder eine Kamera ist, wird sonach, beispielsweise mittels trigonometrischer Berechnungen und/oder einer Parallaxenkorrektur aus der zumeist bezüglich einer Symmetrieachse des Kraftfahrzeugs erfassten Objektinformation ein Steuersignal für die entsprechende Beleuchtungseinrichtung des Kraftfahrzeugs erzeugt.

Um die Beleuchtungseinrichtung pixelgenau steuern zu können, muss dieses Steuersignal einen Steuerungswert für jeden Pixel der Beleuchtungseinrichtung enthalten, der bei Scheinwerfern typischerweise einen Helligkeitswert, beispielsweise 8 Bit für 255 Helligkeitsstufen umfasst. Das so gewonnene Steuersignal wird vor dem Übertragen an die Beleuchtungseinrichtung kodiert und somit komprimiert, um die zu übertragende Datenmenge zu minimieren. Das kodierte Steuersignal wird anschließend an die Beleuchtungseinrichtung übertragen und wird dort dekodiert bzw. dekomprimiert. Anhand des dekomprimierten bzw. dekodierten Steuersignals, das an die Beleuchtungseinrichtung übertragen wurde, wird die Beleuchtungseinrichtung gesteuert. So wird durch die Kodierung und die damit einhergehende Kompression des Steuersignals die Übertragung des Steuersignals zwischen Steuerungseinrichtung und Beleuchtungseinrichtung verbessert bzw. überhaupt erst ermöglicht.

Besonders bevorzugt ist bei dem erfindungsgemäßen Verfahren vorgesehen, dass das Steuersignal für eine erste Beleuchtungseinrichtung in einem ersten Kanal eines Übertragungssignals und das Steuersignal für eine zweite Beleuchtungseinrichtung in einem zweiten Kanal des Übertragungssignals übertragen wird.

Das Übertragungssignal weist sonach wenigstens zwei Kanäle für das Steuersignal der ersten und der zweiten Beleuchtungseinrichtung auf. Die Steuersignale der beiden Beleuchtungseinrichtungen, beispielsweise des linken und des rechten Scheinwerfers des Kraftfahrzeugs, können sonach in demselben Übertragungssignal übertragen werden, wobei diese in je einem Kanal des Übertragungssignals übertragen werden. Vorteilhafterweise kann sonach ein Übertragungssignal übertragen werden, das beide Steuersignale komprimiert und kodiert enthält. Dies bietet den Vorteil, dass eine geringere Datenmenge übertragen werden muss. Ferner bietet dies gegenüber der Möglichkeit, zwei getrennte Übertragungssignale für die erste und die zweite Beleuchtungseinrichtung zu übertragen, den Vorteil, dass das Verhältnis der zu übertragenden Daten zu den darin enthaltenen zu übertragenden Informationen verbessert wird, da diejenigen Daten, die keine zur Steuerung der Beleuchtungseinrichtung relevanten Daten tragen, nur einmal anfallen. Diese Daten ohne Steuerungsbezug sind beispielsweise Prüfsummen und dergleichen. Durch die Übertragung der Steuersignale in einem Übertragungssignal fallen diese Daten nur einmal an und müssen somit nur einmal übertragen werden.

In einer besonders bevorzugten Ausgestaltung des erfindungsgemäßen Verfahrens wird als Übertragungssignal ein Videosignal, insbesondere ein RGB-Signal verwendet. Vorteilhafterweise werden sonach die Steuersignale in Form eines Videosignals kodiert und in entsprechenden Kanälen des Videosignals an die wenigstens eine Beleuchtungseinrichtung übertragen. Beispielsweise kann hierbei das Steuersignal für den linken Scheinwerfer im R-Kanal und das Steuersignal für den rechten Scheinwerfer im B-Kanal des RGB-Signals übertragen werden. Selbstverständlich ist diese Zuordnung beliebig. Dies bietet ferner den Vorteil, dass das üblicherweise als Videosignal verwendete RGB-Signal einen weiteren Kanal bietet, in dem beispielsweise ein Steuersignal für einen Rückfahrscheinwerfer oder einen Nebelscheinwerfer oder ein Kurvenlicht übertragen werden kann. Mit anderen Worten werden die erzeugten Steuersignale mittels einer Videokodierung komprimiert und die Steuersignale für die einzelnen Beleuchtungseinrichtungen des Kraftfahrzeugs auf die Kanäle des Farbvideos aufgeteilt. Durch die Bündelung der Steuersignale für die Beleuchtungseinrichtungen des Kraftfahrzeugs in einem einzigen Farbvideo entsteht gegenüber dem Kodieren der einzelnen Steuersignale in jeweils einem Schwarz-Weiß-Video, nur der halbe Dekodier- bzw. Kodieraufwand. Somit ist auch unabhängig von der zu übertragenden Datenmenge ein Vorteil hinsichtlich der Kodierung des Steuersignals bei der Verwendung eines einzigen Farbvideos für die Steuersignale der Beleuchtungseinrichtungen gegeben.

Eine Weiterbildung des erfindungsgemäßen Verfahrens besteht darin, dass wenigstens eine Kodierungseinrichtung das Übertragungssignal mittels eines Videocodecs, insbesondere H.264, kodiert und/oder dekodiert.

H.264 (MPEG-4 AVC) ist ein H.-Standard zur hocheffizienten Videokompression. H.264 ist für hochaufgelöste Bilddaten ausgelegt. Der Videokodec H.264 ist ferner weit verbreitet und im Stand der Technik hinlänglich bekannt, weshalb eine nähere Beschreibung der Funktionsweise nicht erforderlich ist.

Eine weitere Ausgestaltung des erfindungsgemäßen Verfahrens sieht vor, dass die Kodierung und/oder Dekodierung des Übertragungssignals auf Hardwareebene ausgeführt wird. Dies bietet den Vorteil, dass die Rechenzeit gegenüber softwarebasierenden Lösungen deutlich reduziert ist. Dies ist gerade bei hochauflösenden Beleuchtungseinrichtungen, die eine Vielzahl an anzusteuernden Pixeln aufweisen, essentiell. Insbesondere bei Verwendung des H.264-Standards, der es ermöglicht bei vergleichbarer Qualität eines Signals mit etwa einem Drittel der Datenmenge (im Vergleich zu MPEG-2) auszukommen, ist jedoch auch der Rechenaufwand um einen Faktor 2 bis 3 höher. Dementsprechend ist es essentiell, die Kodierung und/oder die Dekodierung auf Hardwareebene durchzuführen. Insbesondere kann hierzu eine Kodierungseinrichtung vorgesehen sein, die das Steuersignal kodiert, beispielsweise in der Steuerungseinrichtung. Insbesondere wird das Steuersignal einer Beleuchtungseinrichtung in einem Kanal des Übertragungssignals, vorzugsweise eines Farbvideos, kodiert und anschließend übertragen. Das an die Beleuchtungseinrichtung übertragene Übertragungssignal kann anschließend von einer Dekodierungseinrichtung der Beleuchtungseinrichtung bzw. einer mit der Beleuchtungseinrichtung verbundenen Dekodierungseinrichtung dekodiert und somit dekomprimiert werden. In Abhängigkeit dieses wiederum dekodierten Steuersignals kann die Beleuchtungseinrichtung gesteuert werden.

Besonders bevorzugt ist bei dem erfindungsgemäßen Verfahren vorgesehen, dass zur Übertragung des Übertragungssignals an wenigstens zwei Beleuchtungseinrichtungen eine gemeinsame Signalleitung verwendet wird. Wie zuvor beschrieben wird das Steuersignal bzw. werden die Steuersignale der Beleuchtungseinrichtungen bevorzugt in je einem Kanal des Übertragungssignals übertragen. Bevorzugterweise wird das Übertragungssignal über eine Signalleitung zunächst zu einer ersten Beleuchtungseinrichtung und anschließend zu einer zweiten Beleuchtungseinrichtung übertragen. Dies bietet den Vorteil, dass die Länge der Signalleitung gegenüber zwei separaten Signalleitungen signifikant kürzer ausgeführt werden kann. Es ergeben sich ebenfalls Vorteile hinsichtlich des Bauraums und der verwendeten Stecker, die die Signalleitung an die Beleuchtungseinrichtungen koppeln.

Eine bevorzugte Ausgestaltung des erfindungsgemäßen Verfahrens besteht darin, dass als Beleuchtungseinrichtung eine Vielzahl einzelner Lichtquellen, insbesondere LEDs, oder eine Lichtquelle mit einer nachgeschalteten Optikeinheit, vorzugsweise ein Flüssigkristalldisplay oder eine Mikrospiegelanordnung, verwendet wird. Es ist sonach zunächst möglich, die Beleuchtungseinrichtung durch viele einzeln angesteuerte, bevorzugt in Matrixform angeordnete LEDs auszuführen. Die einzelnen LEDs sind dabei einzeln ansteuerbar, das heißt einschaltbar, ausschaltbar und dimmbar. Die einzelnen LEDs werden in Abhängigkeit des Steuersignals gesteuert. Das Steuersignal enthält somit einen Wert für jede der einzelnen LEDs, der insbesondere einem Helligkeitswert, beispielsweise ein 8-bit-Wert, der eine Dimmung jeder einzelnen LED in 255 Stufen zulässt, entspricht.

Alternativ kann eine einzelne LED, beispielsweise eine Hochleistungs-LED oder ein Laser als Lichtquelle mit einer nachgeschalteten Optik verwendet werden. Vorzugsweise wird als nachgeschaltete Optik ein Flüssigkristalldisplay oder eine Mikrospiegelanordnung verwendet. Mittels der Optikeinheit kann die von der Beleuchtungseinrichtung erzeugte Lichtverteilung pixelgenau in mehrere einhunderttausend Pixel gesteuert werden. Daher enthält das Steuersignal für jedes Pixel wiederum einen Helligkeitswert, der beispielsweise als 8-bit-Wert ausgeführt sein kann.

Die wenigstens eine Objektinformation kann bevorzugt mittels eines Radarsensors und/oder wenigstens eines Lidarsensors und/oder wenigstens eines Ultraschallsensors und/oder wenigstens einer Kamera erfasst werden. Vorteilhafterweise weisen moderne Kraftfahrzeuge bereits eine Vielzahl von Sensoren auf, die zum Erfassen der Objektinformation verwendet werden können. Sonach kann aufgrund des erfassten Abstands zwischen Objekt und Kraftfahrzeug und der räumlichen Ausdehnung des Objekts und insbesondere einer dem Objekt zugeordneten Klassifizierung das wenigstens eine Steuersignal für die wenigstens eine Beleuchtungseinrichtung des Kraftfahrzeugs erzeugt werden. In Abhängigkeit der Objektinformation kann sonach die Beleuchtungseinrichtung derart gesteuert werden, dass das Objekt beispielsweise aus der Lichtverteilung ausgeblendet wird oder mittels einer in Form eines Konturlichts erzeugten Lichtverteilung mit Licht markiert wird.

Besonders bevorzugt wird die wenigstens eine Objektinformation von unterschiedlichen Sensoren fusioniert und daraus das wenigstens eine Steuersignal erzeugt. Vorteilhafterweise kann sonach das Steuersignal aus der Vielzahl der Objektinformationen, die mittels der verschiedenen Sensoren erfasst werden, fusioniert werden. Sonach kann ein exaktes Abbild bzw. eine Vielzahl von Informationen, die Umgebung des Kraftfahrzeugs betreffend, zur Erzeugung des Steuersignals verwendet werden. Anhand des so erzeugten Steuersignals ist eine pixelgenaue Ansteuerung der Beleuchtungseinrichtungen möglich.

Daneben betrifft die Erfindung eine Anordnung mit wenigstens einer Beleuchtungseinrichtung für ein Kraftfahrzeug, die eine Erfassungseinrichtung aufweist oder damit verbindbar oder verbunden ist, die dazu ausgebildet ist, ein Objekt in einer Umgebung des Kraftfahrzeugs zu erfassen und eine Objektinformation zu ermitteln, wobei die Anordnung eine Steuerungseinrichtung aufweist oder damit verbindbar oder verbunden ist, die dazu ausgebildet ist, aus der wenigstens einen Objektinformation ein Steuersignal zu erzeugen und die Beleuchtungseinrichtung in Abhängigkeit des Steuersignals zu steuern, wobei das Steuersignal kodiert von der Steuerungseinrichtung an die Beleuchtungseinrichtung übertragbar ist. Das Steuersignal wird anschließend in der Beleuchtungseinrichtung bzw. in einer mit der Beleuchtungseinrichtung verbundenen oder in die Beleuchtungseinrichtung integrierten Dekodierungseinheit dekodiert. Die wenigstens eine Beleuchtungseinrichtung ist danach in Abhängigkeit des Steuersignals steuerbar.

Außerdem betrifft die Erfindung ein Kraftfahrzeug, umfassend wenigstens eine erfindungsgemäße Anordnung mit wenigstens einer Beleuchtungseinrichtung. Selbstverständlich sind sämtliche Einzelheiten und Merkmale, die in Bezug auf das erfindungsgemäße Verfahren beschrieben wurden, auf die Anordnung und das Kraftfahrzeug beliebig übertragbar.

Weitere Vorteile und Einzelheiten der Erfindung werden anhand von Ausführungsbeispielen unter Bezugnahme auf die Zeichnungen näher erläutert. Die Zeichnungen sind schematische Darstellungen und zeigen:
- Fig. 1: eine Draufsicht auf ein erfindungsgemäßes Kraftfahrzeug in einer Verkehrssituation; und
- Fig. 2: ein Flussdiagramm des erfindungsgemäßen Verfahrens.

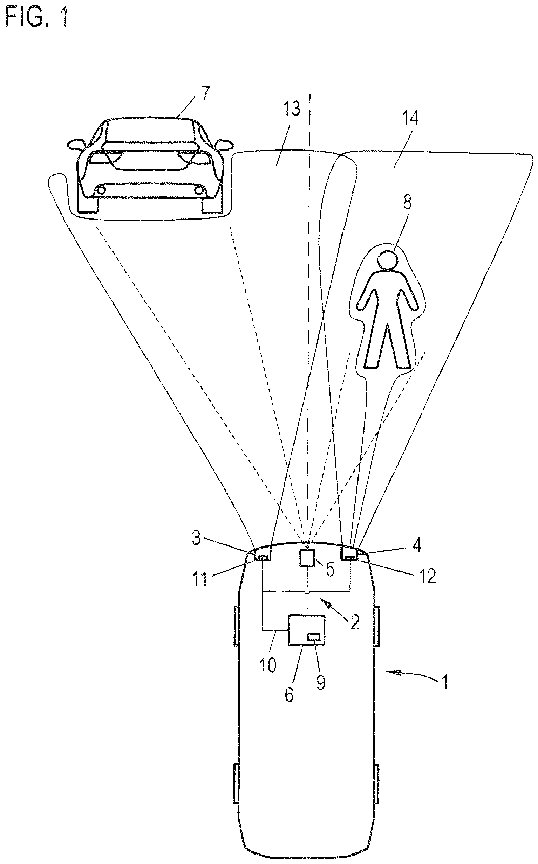

Fig. 1 zeigt ein Kraftfahrzeug 1, das eine Anordnung 2 mit einer ersten Beleuchtungseinrichtung 3 und einer zweiten Beleuchtungseinrichtung 4 aufweist. Die Beleuchtungseinrichtungen 3 und 4 sind gemäß diesem Ausführungsbeispiel als Scheinwerfer ausgebildet. Das Kraftfahrzeug 1 weist ferner eine Erfassungseinrichtung 5 auf, die dazu ausgebildet ist, ein Objekt in der Umgebung des Kraftfahrzeugs 1 zu erfassen und eine Objektinformation zu ermitteln.

Ferner weist das Kraftfahrzeug 1 eine Steuerungseinheit 6 auf, die dazu ausgebildet ist, aus der wenigstens einen Objektinformation ein Steuersignal zu erzeugen, und die Beleuchtungseinrichtungen 3 und 4 in Abhängigkeit des Steuersignals zu steuern.

In der dargestellten Verkehrssituation erfasst die Erfassungseinrichtung 5 ein dem Kraftfahrzeug 1 entgegenkommendes Kraftfahrzeug 7 sowie einen Fußgänger 8, der sich in einem Bereich vor dem Kraftfahrzeug auf der Fahrbahn befindet. Die Erfassungseinrichtung 5 steht stellvertretend in diesem Ausführungsbeispiel für einen Radarsensor und eine Kamera. Anhand der von der Erfassungseinrichtung 5 erfassten Objektinformation, beispielsweise den Abstand und die Geschwindigkeit und die Geometrie der erfassten Objekte sowie deren Objektklasse, die die Erfassungseinrichtung 5 dem Kraftfahrzeug 7 und dem Fußgänger 8 zuordnet, erzeugt die Steuerungseinrichtung 6 ein Steuersignal für die Beleuchtungseinrichtungen 3 und 4.

Das Steuersignal für die Beleuchtungseinrichtung 3 weicht dabei von dem Steuersignal für die Beleuchtungseinrichtung 4 ab, da die beiden Beleuchtungseinrichtungen 3 und 4 unterschiedliche Lichtverteilungen aufgrund der unterschiedlichen Einbauposition am Kraftfahrzeug 1 erzeugen müssen. Mit anderen Worten sind die in den einzelnen Lichtverteilungen, die von der Beleuchtungseinrichtung 3 und der Beleuchtungseinrichtung 4 erzeugt werden, andere Bereiche auszublenden bzw. verstärkt mit Licht zu markieren.

Gemäß diesem Ausführungsbeispiel werden als Beleuchtungseinrichtungen 3 und 4 hochauflösende Scheinwerfer verwendet. Dies bietet die Möglichkeit, eine pixelgenaue Ansteuerung der Beleuchtungseinrichtungen 3 und 4 vorzunehmen, was einen erhöhten Datenaufwand, der zwischen der Steuerungseinrichtung 6 und den Beleuchtungseinrichtungen 3 und 4 übertragen werden muss, mit sich bringt. Insbesondere sind für jede Beleuchtungseinrichtung 3, 4 mehrere einhunderttausend Pixel steuerbar.

Die Steuerungseinrichtung 6 weist eine Kodierungseinheit 9 auf, die hinsichtlich ihrer Hardware für die Kodierung des Steuersignals ausgelegt ist. Beispielsweise kann die Kodierungseinrichtung 9 dazu wenigstens einen DSP (digital signal processor) oder ähnliche Einrichtungen aufweisen, die dazu ausgebildet sind, eine Kodierung, insbesondere eine Videokodierung des Steuersignals, vorzunehmen.

Gemäß diesem Ausführungsbeispiel wird das Steuersignal bzw. werden die beiden Steuersignale für die Beleuchtungseinrichtungen 3 und 4 mittels dem Videocodec H.264 in ein Übertragungssignal, das einem Farbvideo entspricht, kodiert. Das Steuersignal für die Beleuchtungseinrichtung 3 ist dabei dem R-Kanal und das Steuersignal für die Beleuchtungseinrichtung 4 dem B-Kanal des RGB-Signals, dass das Übertragungssignal umfasst, kodiert. Das kodierte und somit komprimierte Übertragungssignal wird anschließend über eine Signalleitung 10 an die erste Beleuchtungseinrichtung 3 und die zweite Beleuchtungseinrichtung 4 übertragen. Die Signalleitung 10 stellt dabei eine gemeinsame Signalleitung 10 für die beiden Beleuchtungseinrichtungen 3 und 4 dar. Die Beleuchtungseinrichtungen 3 und 4 weisen je eine Dekodierungseinheit 11 und 12 auf, die dazu ausgebildet ist, das Übertragungssignal, also letztlich das kodierte Steuerungssignal, zu dekodieren bzw. dekomprimieren.

Anschließend können die Beleuchtungseinrichtung 3 und die Beleuchtungseinrichtung 4 in Abhängigkeit des entsprechenden Steuersignals, das für die Beleuchtungseinrichtung 3 im R-Kanal und für die Beleuchtungseinrichtung 4 im B-Kanal des Übertragungssignals übertragen wurde, gesteuert werden, so dass die Beleuchtungseinrichtung 3 eine Lichtverteilung 13 erzeugt, in der insbesondere das Kraftfahrzeug 7 ausgeblendet ist. Die Beleuchtungseinrichtung 4 kann sonach derart gesteuert werden, dass diese eine Lichtverteilung 14 erzeugt, in der der sich auf der Fahrbahn befindende Fußgänger 8 verstärkt mit Licht markiert werden kann. Die Beleuchtungseinrichtungen 3 und 4 können dabei aufgrund des Steuersignals pixelgenau angesteuert werden, so dass hochauflösende Lichtverteilungen 13, 14 erzeugt werden können.

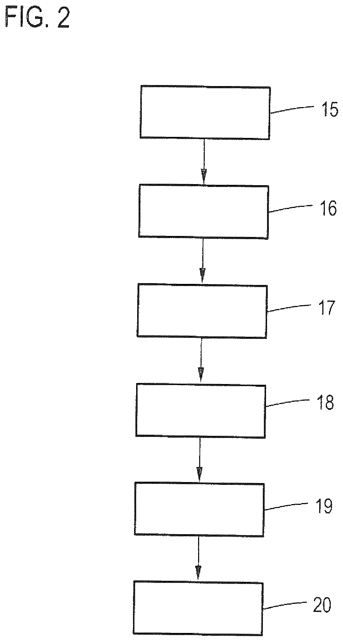

Fig. 2 zeigt ein Flussdiagramm mit den wesentlichen Schritten eines Verfahrens zum Betreiben der Anordnung 2 mit wenigstens einer Beleuchtungseinrichtung 3, 4 für das Kraftfahrzeug 1 nach Fig. 1. Zunächst wird in Schritt 15 mittels der Erfassungseinrichtung 5 die Umgebung des Kraftfahrzeugs 1, insbesondere der Bereich vor dem Kraftfahrzeug 1 erfasst. Hierbei werden das entgegenkommende Kraftfahrzeug 7 sowie der Fußgänger 8 im Vorfeld des Kraftfahrzeugs 1 erfasst und deren Objektinformationen werden ermittelt. Insbesondere kann für die Objekte ein Abstand und eine Geschwindigkeit und eine räumliche Ausdehnung erfasst und ihnen eine Objektklasse zugeordnet werden.

Anschließend wird in Schritt 16 von der Steuerungseinrichtung 6 aus der wenigstens einen Objektinformation ein Steuersignal für die erste Beleuchtungseinrichtung 3 und die zweite Beleuchtungseinrichtung 4 erzeugt. Das Steuersignal enthält insbesondere eine pixelgenaue Ansteuerung für jede der hochauflösenden Beleuchtungseinrichtungen 3 und 4.

Zur Reduzierung der zu übertragenden Datenmenge wird das Steuersignal in Schritt 17 von der Kodierungseinheit 9, die in diesem Ausführungsbeispiel in die Steuerungseinrichtung 6 integriert ist, kodiert. Dazu wird beispielsweise der Videocodec H.264 verwendet. Gemäß diesem Ausführungsbeispiel wird das Steuersignal für die erste Beleuchtungseinrichtung 3, die der linke Scheinwerfer des Kraftfahrzeugs 1 ist, in den R-Kanal des Übertragungssignals und das Steuersignal für die zweite Beleuchtungseinrichtung 4, die der rechte Scheinwerfer des Kraftfahrzeugs 1 ist, in den B-Kanal des RGB-Signals kodiert. Im Zuge dieser Kodierung findet durch die Anwendung des Videocodecs H.264 eine Komprimierung der Steuersignale statt.

In Schritt 18 wird das Übertragungssignal, das letztlich ein Videosignal mit den Steuersignalen für die erste und die zweite Beleuchtungseinrichtung 3 und 4 darstellt, von der Steuerungseinrichtung 6 an die Beleuchtungseinrichtung 3 und die Beleuchtungseinrichtung 4 über die Signalleitung 10 übertragen.

Die Beleuchtungseinrichtung 3 und die Beleuchtungseinrichtung 4 weisen je eine Dekodierungseinrichtung 11 und 12 auf, die das übertragene Übertragungssignal dekodieren bzw. dekomprimieren und somit aus dem Übertragungssignal das Steuersignal für die Beleuchtungseinrichtung 3 und die Beleuchtungseinrichtung 4 erhalten.

Anschließend kann in Schritt 20 die Beleuchtungseinrichtung 3 und die Beleuchtungseinrichtung 4 pixelgenau aufgrund des entsprechenden Steuersignals angesteuert werden, so dass die Beleuchtungseinrichtung 3 eine Lichtverteilung 13 erzeugt, aus der insbesondere das entgegenkommende Kraftfahrzeug 7 ausgeblendet ist und die Beleuchtungseinrichtung 4 kann eine Lichtverteilung 14 erzeugen, in der der Fußgänger 8 verstärkt mit Licht markiert wird.

Selbstverständlich sind alle Vorteile und Einzelheiten des erfindungsgemäßen Verfahrens und des erfindungsgemäßen Kraftfahrzeugs beliebig kombinierbar bzw. übertragbar.

## Patentansprüche

1. Verfahren zum Betreiben einer Anordnung (2) mit wenigstens einer Beleuchtungseinrichtung (3, 4) für ein Kraftfahrzeug (1), wobei eine Erfassungseinrichtung (5) wenigstens eine Objektinformation eines Objekts in einer Umgebung des Kraftfahrzeugs (1) erfasst und eine Steuerungseinrichtung (6) wenigstens ein Steuersignal aus der wenigstens einen Objektinformation erzeugt und die wenigstens eine Beleuchtungseinrichtung (3, 4) des Kraftfahrzeugs (1) in Abhängigkeit des wenigstens einen Steuersignals gesteuert wird,
**dadurch gekennzeichnet,**
**dass** das Steuersignal kodiert und komprimiert an die Beleuchtungseinrichtung (3, 4) übertragen und dort dekodiert und dekomprimiert wird und die wenigstens eine Beleuchtungseinrichtung (3, 4) in Abhängigkeit des Steuersignals gesteuert wird.

2. Verfahren nach Anspruch 1,
**dadurch gekennzeichnet,**
**dass** das Steuersignal für eine erste Beleuchtungseinrichtung (3, 4) in einem ersten Kanal eines Übertragungssignals und das Steuersignal für eine zweite Beleuchtungseinrichtung (3, 4) in einem zweiten Kanal des Übertragungssignals übertragen wird.

3. Verfahren nach Anspruch 2,
**dadurch gekennzeichnet,**
**dass** als Übertragungssignal ein Videosignal, insbesondere ein RGB-Signal, verwendet wird.

4. Verfahren nach einem der vorangehenden Ansprüche,
**dadurch gekennzeichnet,**
**dass** wenigstens eine Kodierungseinrichtung (9) das Übertragungssignal mittels eines Videocodecs, insbesondere H.264, kodiert und/oder dekodiert.

5. Verfahren nach einem der vorangehenden Ansprüche,
**dadurch gekennzeichnet,**
**dass** die Kodierung und/oder die Dekodierung des Übertragungssignals auf Hardwareebene ausgeführt wird.

6. Verfahren nach einem der vorangehenden Ansprüche,
**dadurch gekennzeichnet,**
**dass** zur Übertragung des Übertragungssignals an wenigstens zwei Beleuchtungseinrichtungen (3, 4) eine gemeinsame Signalleitung (10) verwendet wird.

7. Verfahren nach einem der vorangehenden Ansprüche,
**dadurch gekennzeichnet,**
**dass** als Beleuchtungseinrichtung (3, 4) eine Vielzahl einzelner LEDs oder eine Lichtquelle mit einer nachgeschalteten Optikeinheit, vorzugsweise ein Flüssigkristalldisplay oder eine Mikrospiegelanordnung, verwendet wird.

8. Verfahren nach einem der vorangehenden Ansprüche,
**dadurch gekennzeichnet,**
**dass** die wenigstens eine Objektinformation mittels wenigstens eines Radarsensors und/oder wenigstens eines Lidarsensors und/oder wenigstens eines Ultraschallsensors und/oder wenigstens einer Kamera erfasst wird.

9. Verfahren nach Anspruch 8,
**dadurch gekennzeichnet,**
**dass** die Objektinformationen von unterschiedlichen Sensoren fusioniert werden und daraus das wenigstens eine Steuersignal erzeugt wird.

10. Anordnung (2) mit wenigstens einer Beleuchtungseinrichtung (3, 4) für ein Kraftfahrzeug (1), die eine Erfassungseinrichtung (5) aufweist oder damit verbindbar oder verbunden ist, die dazu ausgebildet ist, ein Objekt in einer Umgebung des Kraftfahrzeugs (1) zu erfassen und eine Objektinformation zu ermitteln, wobei die Anordnung (2) eine Steuerungseinrichtung (6) aufweist oder damit verbindbar oder verbunden ist, die dazu ausgebildet ist, aus der wenigstens einen Objektinformation ein Steuersignal zu erzeugen und die Beleuchtungseinrichtung (3, 4) in Abhängigkeit des Steuersignals zu steuern,
**dadurch gekennzeichnet,**
**dass** die Anordnung (2) zur Durchführung des Verfahrens nach einem der vorangehenden Ansprüche ausgebildet ist.

11. Kraftfahrzeug (1), umfassend wenigstens eine Anordnung (2) nach Anspruch 10, die eine Erfassungseinrichtung (5) aufweist oder damit verbindbar oder verbunden ist, die dazu ausgebildet ist, ein Objekt in einer Umgebung des Kraftfahrzeugs (1) zu erfassen und eine Objektinformation zu ermitteln, wobei die Anordnung (2) eine Steuerungseinrichtung (6) aufweist oder damit verbindbar oder verbunden ist, die dazu ausgebildet ist, aus der wenigstens einen Objektinformation ein Steuersignal zu erzeugen und die wenigstens eine Beleuchtungseinrichtung (3, 4) in Abhängigkeit des Steuersignals zu steuern,
**dadurch gekennzeichnet,**
**dass** das Kraftfahrzeug (1) zur Durchführung des Verfahrens nach einem der Ansprüche 1 bis 9 ausgebildet ist.

## Claims

1. Method for operating an arrangement (2) having at least one illuminating device (3, 4) for a motor vehicle (1), wherein a detection device (5) detects at least one piece of object information of an object in a surrounding environment of the motor vehicle (1) and a control device (6) generates at least one control signal from the at least one piece of object information and the at least one illuminating device (3, 4) of the motor vehicle (1) is controlled depending on the at least one control signal, **characterised in that** the control signal is transmitted to the illuminating device (3, 4) in a coded and compressed manner and is decoded and decompressed there and the at least one illuminating device (3, 4) is controlled depending on the control signal.

2. Method according to claim 1, **characterised in that** the control signal for a first illuminating device (3, 4) is transmitted in a first channel of a transmission signal and the control signal for a second illuminating device (3, 4) is transmitted in a second channel of the transmission signal.

3. Method according to claim 2, **characterised in that** a video signal, in particular an RGB-signal, is used as a transmission signal.

4. Method according to any one of the preceding claims, **characterised in that** at least one coding device (9) codes and/or decodes the transmission signal by means of a video codec, in particular H.264.

5. Method according to any one of the preceding claims, **characterised in that** the coding and/or the decoding of the transmission signal is executed on a hardware level.

6. Method according to any one of the preceding claims, **characterised in that** a mutual signal line (10) is used for transmitting the transmission signal to at least two illuminating devices (3, 4).

7. Method according to any one of the preceding claims, **characterised in that** a plurality of individual LEDs or a light source having a downstream optical unit, preferably a liquid crystal display or a micro mirror array, is used as an illuminating device (3, 4).

8. Method according to any one of the preceding claims, **characterised in that** the at least one piece of object information is detected by means of at least one radar sensor and/or at least one lidar sensor and/or at least one ultrasound sensor and/or at least one camera.

9. Method according to claim 8, **characterised in that** the pieces of object information are consolidated from different sensors and the at least one control signal is generated therefrom.

10. Arrangement (2) having at least one illuminating device (3, 4) for a motor vehicle (1), which has a detection device (5) or is able to be connected or is connected thereto, which is formed to detect an object in a surrounding environment of the motor vehicle (1) and to determine a piece of object information, wherein the arrangement (2) has a control device (6) or is able to be connected or is connected thereto, which is formed to generate a control signal from the at least one piece of object information and to control the illuminating device (3, 4) depending on the control signal, **characterised in that** the arrangement (2) is formed for implementing the method according to any one of the preceding claims.

11. Motor vehicle (1), comprising at least one arrangement (2) according to claim 10, which has a detection device (5) or is able to be connected or is connected thereto, which is formed to detect an object in a surrounding environment of the motor vehicle (1) and to determine a piece of object information, wherein the arrangement (2) has a control device (6) or is able to be connected or is connected thereto, which is formed to generate a control signal from the at least one piece of object information and to control the at least one illuminating device (3, 4) depending on the control signal, **characterised in that** the motor vehicle (1) is formed for implementing the method according to any one of claims 1 to 9.

## Revendications

1. Procédé pour faire fonctionner un ensemble (2) comprenant au moins un dispositif d'éclairage (3, 4) pour un véhicule automobile (1), dans lequel un dispositif de détection (5) détecte au moins une information d'objet d'un objet dans un environnement du véhicule automobile (1) et un dispositif de commande (6) génère au moins un signal de commande à partir de l'au moins une information d'objet et l'au moins un dispositif d'éclairage (3, 4) du véhicule automobile (1) est commandé en fonction de l'au moins un signal de commande,
**caractérisé en ce**
**que** le signal de commande est codé et transmis compressé au dispositif d'éclairage (3, 4) et y est décodé et décompressé et l'au moins un dispositif d'éclairage (3, 4) est commandé en fonction du signal de commande.

2. Procédé selon la revendication 1,
**caractérisé en ce**
**que** le signal de commande pour le premier dispositif d'éclairage (3, 4) est transmis dans un premier canal d'un signal de transmission et le signal de commande pour le second dispositif d'éclairage (3, 4) est transmis dans un second canal du signal de transmission.

3. Procédé selon la revendication 2,
**caractérisé en ce**
**qu'**un signal vidéo, en particulier un signal RGB, est utilisé en tant que signal de transmission.

4. Procédé selon l'une quelconque des revendications précédentes,
**caractérisé en ce**
**qu'**au moins un dispositif de codage (9) code et/ou décode le signal de transmission au moyen d'un codec vidéo, en particulier H.264.

5. Procédé selon l'une quelconque des revendications précédentes,
**caractérisé en ce**
**que** le codage et/ou le décodage du signal de transmission est effectué au niveau matériel.

6. Procédé selon l'une quelconque des revendications précédentes,
**caractérisé en ce**
**qu'**une ligne de signaux commune (10) est utilisée pour la transmission du signal de transmission à au moins deux dispositifs d'éclairage (3, 4).

7. Procédé selon l'une quelconque des revendications précédentes,
**caractérisé en ce**
**qu'**une pluralité de LED individuelles ou une source de lumière avec une unité optique en aval, de préférence un écran à cristaux liquides ou un ensemble micro-miroir, est utilisée en tant que dispositif d'éclairage (3, 4).

8. Procédé selon l'une quelconque des revendications précédentes,
**caractérisé en ce**
**que** l'au moins une information d'objet est détectée au moyen d'au moins un capteur radar et/ou d'au moins un capteur Lidar et/ou d'au moins un capteur ultrasonique et/ou d'au moins une caméra.

9. Procédé selon la revendication 8,
**caractérisé en ce**
**que** les informations d'objet de différents capteurs sont fusionnées et l'au moins un signal de commande est généré à partir de celles-ci.

10. Ensemble (2) comprenant au moins un dispositif d'éclairage (3, 4) pour un véhicule automobile (1), qui présente un dispositif de détection (5) ou peut être relié ou est relié à celui-ci, qui est réalisé pour détecter un objet dans un environnement du véhicule automobile (1) et pour déterminer une information d'objet, dans lequel l'ensemble (2) présente un dispositif de commande (6) ou peut être relié ou est relié à celui-ci, qui est réalisé pour générer un signal de commande à partir de l'au moins une information d'objet et pour commander le dispositif d'éclairage (3, 4) en fonction du signal de commande,
**caractérisé en ce**
**que** l'ensemble (2) est réalisé pour la mise en œuvre du procédé selon l'une quelconque des revendications précédentes.

11. Véhicule automobile (1), comprenant au moins un ensemble (2) selon la revendication 10, qui présente un dispositif de détection (5) ou peut être relié ou est relié à celui-ci, qui est réalisé pour détecter un objet dans un environnement du véhicule automobile (1) et pour déterminer une information d'objet, dans lequel l'ensemble (2) présente un dispositif de commande (6) ou peut être relié ou est relié à celui-ci, qui est réalisé pour générer un signal de commande à partir de l'au moins une information d'objet et pour commander l'au moins un dispositif d'éclairage (3, 4) en fonction du signal de commande,
**caractérisé en ce**
**que** le véhicule automobile (1) est réalisé pour la mise en œuvre du procédé selon l'une quelconque des revendications 1 à 9.
